# FASCICULE DE BREVET EUROPEEN

(11) **EP 0 426 531 B1**
(45) Date de publication et mention de la délivrance du brevet: **14.12.1994**
(21) Numéro de dépôt: 90402995.6
(22) Date de dépôt: 24.10.1990
(51) Int. Cl.: G06F 11/26

(54) **Système de test d'un microprocesseur**
Prüfsystem für einen Mikroprozessor
Microprocessor test system

(30) Priorité: 31.10.1989 FR 8914298
(43) Date de publication de la demande: 08.05.1991
(73) Titulaire: SGS-THOMSON MICROELECTRONICS S.A., 94250 Gentilly (FR)
(72) Inventeur: Charvin, Jean-Pierre, F-75116 Paris (FR)
(74) Mandataire: Ballot, Paul Denis Jacques

(56) Documents cités:
- US-A- 3 961 252
- US-A- 4 366 393
- COMPUTER, vol. 13, no. 3, mars 1980, pages 17-25, IEEE, Long Beach, CA, US; J.P. HAYES et al.: "Testability considerations in microprocessor-based design"
- PROCEEDINGS OF THE NATIONAL COMMUNICATIONS FORUM, vol. 40, partie II, 1986,pages 1162-1169, Oak Brook, Illinois, US; H.A. KALVONJIAN et al.: "Built-in self-test"
- self-test"

## Description

L'invention concerne les microprocesseurs réalisés sous forme de puces de circuits intégrés et, plus particulièrement dans de tels microprocesseurs, un système de test qui est réalisé sur la puce du microprocesseur.

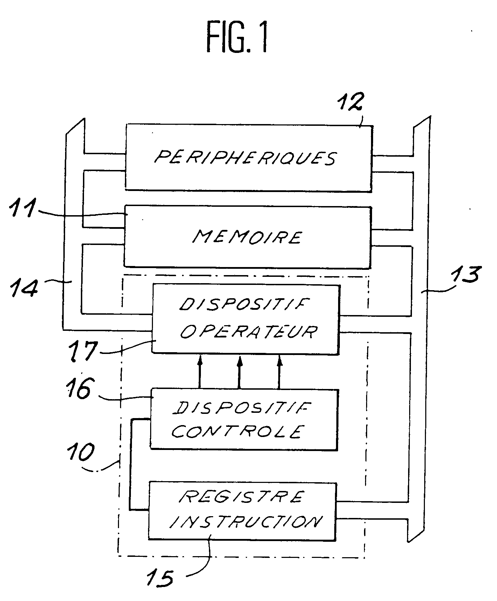

Un ordinateur comprend principalement, comme le montre la figure 1, une unité centrale ou processeur 10 qui réalise des opérations arithmétiques ou logiques sur des nombres, au moins une mémoire 11 qui contient les nombres sur lesquels et à l'aide desquels s'effectuent lesdites opérations, des organes périphériques 12, tels que clavier, imprimante et mémoire additionnelle, qui permettent d'entrer les informations à traiter et les opérations à effectuer et de recueillir les résultats des opérations effectuées et des dispositifs de transmission 13 et 14, appelés bus, qui permettent aux différents organes 10,11 et 12 de communiquer entre eux. L'unité centrale ou processeur 10 comporte un registre 15, dit Registre Instruction, qui reçoit du bus 13 les nombres ou codes opératoires indiquant les opérations élémentaires à effectuer, un dispositif opérateur 17 qui effectue les opérations élémentaires et un dispositif 16 de contrôle desdites opérations qui traduit les codes des instructions élémentaires en signaux de commande du dispositif 17.

Les dispositifs de transmission ou bus 13 ou 14 sont affectés l'un 13 à la transmission bidirectionnelle des données ou opérandes (bus de données) sur lesquelles s'effectuent les opérations indiquées par les codes opératoires contenus dans le registre 15, l'autre 14 à la transmission unidirectionnelle des codes d'adressage de la mémoire 11 et des organes périphériques 12. Les opérandes sont fournies par la mémoire 11 et le dispositif opérateur 17 tandis que les codes d'adressage sont générés par le dispositif opérateur 17.

Pour effectuer un traitement d'informations, le processeur exécute une suite d'opérations dont les codes opératoires ou instructions sont contenus dans la mémoire 11, l'ensemble de ces instructions constituant un programme.

Dans les ordinateurs actuels, le processeur est réalisé sous la forme de circuits qui sont intégrés sur un substrat de silicium de faibles dimensions appelé puce. En fin de la chaîne de fabrication, les processeurs, appelés aussi microprocesseurs, doivent être vérifiés ou testés de manière à détecter ceux dont le fonctionnement est défectueux et ainsi les écarter.

D'une manière générale, la vérification d'un microprocesseur consiste d'abord à générer des signaux d'entrée et à vérifier la conformité des signaux de sortie avec ceux qui sont attendus en fonctionnement normal. Il existe de nombreuses manières d'effectuer une telle vérification. L'une d'entre elles consiste à connecter le microprocesseur à une machine de test qui fournit les signaux d'entrée et qui compare les signaux de sortie à ceux qui correspondent à un fonctionnement normal.

Une autre manière consiste à faire effectuer la vérification par le microprocesseur lui-même en incorporant sur le substrat de la puce des organes spécifiques qui ont pour but, d'une part, de générer des signaux d'entrée et, d'autre part, de vérifier les signaux de sortie. Les signaux d'entrée sont obtenus par une mémoire morte également appelée mémoire à lecture uniquement (ROM): voir par exemple COMPUTER, vol. 13, no. 3, mars 1980, pages 17-25, IEEE, Long Beach, CA, US; J.P. HAYES et al.: "Testability considerations in microprocessor-based design". Les signaux de sortie sont vérifiés par un compteur ou diviseur polymonial qui fournit à la fin de l'exécution du programme de test un code qui est comparé à celui qui aurait dû être obtenu en cas de fonctionnement sans faute, ce code de référence étant enregistré dans la mémoire morte.

Ce type de vérification, dit de test intégré, présente les inconvénients suivants. D'abord, la réalisation d'un test complet entraîne la mise en oeuvre d'une mémoire morte de capacité relativement élevée, mémoire qui est uniquement utilisée par le test. Cette mémoire utilise une partie non négligeable soit de la superficie de la puce lorsque cette mémoire est unique, soit de la mémoire de programme lorsque celle-ci est intégrée sur la puce.

Ensuite, ce type de test suppose que le processeur est capable de lire les codes opératoires et les opérandes dans la mémoire et que cette dernière n'a pas de défaut, ce qui, dans le cas d'une défaillance à ce niveau, conduit à une divergence de la séquence de test dès le début, divergence qui n'est pas due au mauvais fonctionnement du processeur.

Enfin, un grand nombre de codes opératoires n'entraînent pas de modification des états des bus de données et d'adresses mais modifient le contenu des registres internes du dispositif opérateur 17 ou des bits dits de "status". Pour une vérification sérieuse, le programme associé à ces codes opératoires doit être prévu pour vérifier, par des instructions de comparaison et de branchement, que l'instruction s'est déroulée correctement à l'intérieur du dispositif opérateur 17. Ceci entraîne une augmentation corrélative de la mémoire morte.

Un but de la présente invention est donc de réaliser un système de test d'un microprocesseur qui ne présente pas les inconvénients précités. Ce système effectue donc une vérification du microprocesseur, y compris des registres internes et des bits de status, sans utiliser de mémoire morte.

L'invention se rapporte à un système de test d'un microprocesseur réalisé sur une puce de circuit intégré, ledit microprocesseur comprenant au moins un registre d'instruction pour recevoir les codes opératoires des opérations élémentaires, un dispositif opérateur pour exécuter les opérations élémentaires, un dispositif de contrôle desdites opérations élémentaires qui traduit les codes opératoires en signaux de commande du dispositif opérateur, un compteur polynomial, un bus d'adresses qui connecte le dispositif opérateur aux entrées du compteur polynomial et un bus de données qui connecte entre eux le registre d'instruction, le dispositif opérateur et le compteur polynomial, caractérisé en ce que ledit système de test comprend :
- des premiers moyens pour transformer ledit registre d'instruction en un compteur et pour déconnecter ce dernier du bus de données,
- des deuxièmes moyens pour enregistrer dans ledit compteur, au début de la séquence de test, un code opératoire correspondant à une instruction de rechargement du contexte de manière à initialiser les états de divers éléments du microprocesseur à une valeur déterminée,
- des troisièmes moyens pour, à la fin de l'exécution d'une instruction dont le code est contenu dans ledit compteur, élaborer une instruction de sauvegarde de contexte et incrémenter d'une unité le contenu du compteur.
- des quatrièmes moyens pour déterminer la fin de la séquence de test et,
- des cinquièmes moyens pour décoder le code contenu dans le compteur polynomial à la fin de la séquence de test.

Dans le cas où le microprocesseur est associé à une mémoire et est connecté à cette dernière par des bus d'adresses et de données, le système de test comprend en outre des sixièmes moyens pour déconnecter, pendant la séquence de test, les entrées/sorties de ladite mémoire des bus d'adresses et de données.

Le système de test selon l'invention est également caractérisé en ce que les bornes de sortie du compteur polynomial sont connectées aux bus de données par l'intermédiaire de portes électroniques, ces dernières étant commandées de manière que lesdites bornes de sortie du compteur polynomial soient connectées au bus de données pendant la séquence de test et fournissent ainsi les opérandes nécessaires à l'exécution de certaines instructions.

D'autres caractéristiques et avantages de la présente invention apparaîtront à la lecture de la description suivante d'un exemple particulier de réalisation, ladite description étant faite en relation avec les dessins joints dans lesquels :
- la figure 1 est un schéma de principe d'un microprocesseur, et
- la figure 2 est un schéma d'un microprocesseur comportant un système de test intégré selon la présente invention.

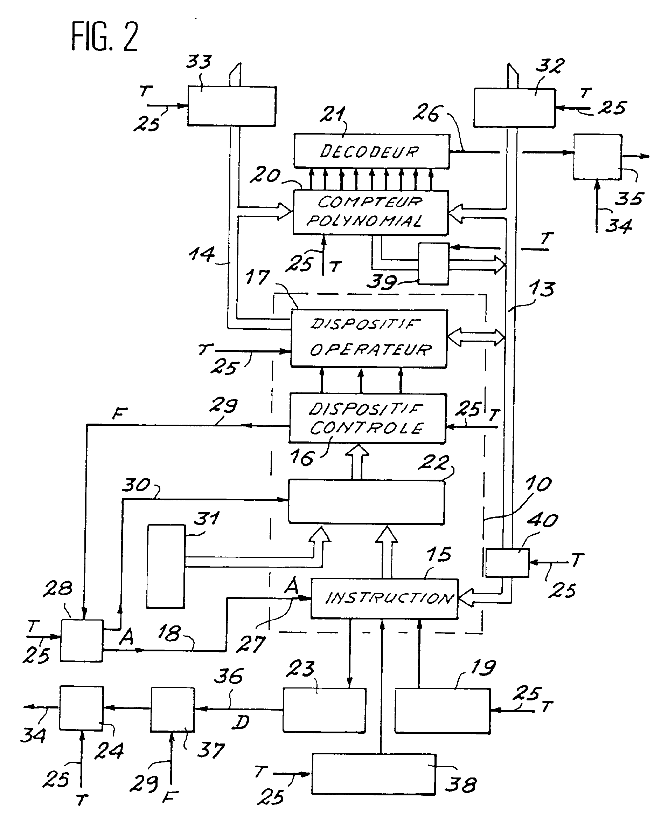

La figure 1, décrite dans le préambule,1 montre les différents organes d'un microprocesseur. Le système de test selon l'invention concerne la vérification du fonctionnement de l'unité centrale ou processeur 10 et comprend les éléments additionnels suivants qui seront décrits en relation avec la figure 2.

Ces éléments additionnels comprennent essentiellement un compteur polynomial 20 associé à un premier circuit de décodage ou décodeur 21, un dispositif de modification 19 des connexions du registre d'instruction 15 pour le transformer en compteur, un premier circuit bistable 28, un premier registre 31 contenant un premier code d'instruction particulier, un deuxième registre 38 contenant un deuxième code d'instruction particulier un circuit d'aiguillage 22 des codes contenus dans le registre d'instruction 15 et le registre 31, un deuxième circuit de décodage ou décodeur 23 connecté aux bornes de sortie du d'instruction 15, un deuxième circuit bistable 24 connecté à la sortie du deuxième décodeur 23 par l'intermédiaire d'une porte électrique 37. A ces éléments additionnels, il faut ajouter des portes électroniques 32 et 33 disposées respectivement sur les bus 13 et 14 de manière à pouvoir déconnecter la mémoire 11 du système de test et du processeur pendant les opérations de test. Il est également prévu des portes électroniques 39 pour connecter les sorties du compteur polynomial 20 au bus de données pendant les opérations de test et les déconnecter en fonctionnement normal du microprocesseur, ce qui permet d'utiliser le compteur polynomial en tant qu'émetteur d'opérandes. Enfin, des portes électroniques 40 sont disposées sur le bus 13 à l'entrée du registre/compteur 15 pour le déconnecter du bus lors des opérations de test. Pour que ces différents éléments 19 à 24 deviennent actifs, le système comprend, en outre, un conducteur 25 sur lequel est appliqué un signal T de début de test qui est appliqué à différents éléments du processeur 10 et du système de test pour les mettre dans des états déterminés. Ces éléments sont le compteur polynomial 20, le dispositif opérateur 17, le dispositif de contrôle 16, les circuits bistables 24 et 28, le registre d'instruction/compteur 25 et son dispositif de modifications 19 et les portes électroniques 32, 33, 39 et 40.

Le compteur polynomial 20 est d'un type classique et ne sera pas décrit de manière plus détaillée. Les bornes d'entrée de ce compteur polynomial sont connectées, d'une part, au bus de données 13 par l'intermédiaire des portes électroniques 39 et, d'autre part, au bus d'adresses 14. Dans le cas habituel où les codes d'adresses comportent plus de digits que les codes de données, par exemple 16 et 8 respectivement, seuls les conducteurs du bus d'adresses correspondant aux poids faibles des codes d'adresses sont connectés aux bornes d'entrées du compteur polynomial. Les bornes de sortie du compteur polynomial sont connectées, d'une part, au bus de données 13 par l'intermémdiaire des portes électroniques 39 et, d'autre part, au décodeur 21. Le décodeur 21 fournit un signal sur un conducteur de sortie 26 lorsque le code contenu dans le compteur polynomial correspond à un code déterminé. Ce code est déterminé par une simulation informatique du fonctionnement sans faute du processeur en supposant que ce dernier est connecté au compteur polynomial 20 comme décrit ci-dessus.

Le code contenu dans le compteur polynomial à la fin de la simulation informatique sans faute constitue le code auquel doit aboutir une séquence de test selon l'invention en l'absence de faute du processeur. La présence de ce code indique donc que le processeur fonctionne correctement et, sur décodage par le circuit 21, fournit un signal sur le conducteur 26.

Dans un processeur, le registre d'instruction reçoit les codes opératoires ou d'instruction fournis par le bus de données et a donc un fonctionnement statique. Selon l'invention, le registre 15 a un fonctionnement dynamique par modification des connexions entre les différents étages pour qu'il devienne un compteur. La modification d'un registre en compteur dans le but d'éxécuter un programme de test est connue de US 3 961 252, quoique dans un contexte très différent : il s'agit de test de mémoires et non de microprocesseurs. Il suffit pour cela d'ajouter des portes électroniques (circuit 19) au registre d'instruction, portes qui sont commandées par le signal T sur le conducteur 25. Par ailleurs, il est nécessaire que le registre 15 ne fonctionne qu'en compteur, auquel cas il doit être déconnecté du bus de données 13, déconnexion qui est obtenue par les portes électroniques 40 commandées par le signal T. En outre, la séquence de test doit commencer avec un code d'instruction particulier qui est celui de rechargement du contexte, ce qui est obtenu par un registre ou mémoire 38 qui contient ce code, qui est connecté aux bornes d'entrée parallèle du registre/compteur 15 et qui est activé par le signal T. Le registre/compteur 15 passe d'un code opératoire ou d'instruction au suivant sous la commande d'un signal A appliqué sur une entrée de comptage 27. Le signal A est fourni par une borne de sortie 18 du circuit bistable 28 dont la borne d'entrée est connectée à une borne de sortie 29 du dispositif de contrôle 16. Ce dernier fournit un signal F lorsque l'instruction contenue dans le registre/compteur 15 a été exécutée, ce qui permet de passer à l'instruction suivante.

L'autre borne de sortie 30 du circuit bistable 28 est connectée au circuit d'aiguillage 22 qui est disposé entre, d'une part, le registre/compteur 15 et le registre 31 et, d'autre part, le dispositif de contrôle 16. Ce circuit d'aiguillage 22 a pour but de transmettre au dispositif de contrôle, soit le code contenu dans le compteur 15, soit le code contenu dans le registre 31. Selon l'invention, le code contenu dans le registre 31 est celui de l'instruction de sauvegarde du contexte. Cette instruction a pour but de sauvegarder le contenu d'un certain nombre de registres du dispositif opérateur 17 et du dispositif de contrôle 16 lorsqu'une instruction a été complètement exécutée. Ainsi, lorsque le dispositif de contrôle 16 fournit un signal F de fin d'instruction sur le conducteur 29, le circuit bistable 28 change d'état et fournit sur le conducteur 30 un signal au circuit d'aiguillage 22 qui transmet alors le code d'instruction de sauvegarde du contexte au dispositif de contrôle 16. Les états des registres à sauvegarder sont alors transmis au compteur polynomial par le bus de données 13.

Le signal A qui est fourni sur le conducteur 18 de sortie du circuit bistable 28 provoque le changement d'état du registre/compteur 15 de manière à faire apparaître le code de l'instruction suivante dans l'ordre normal du comptage prévu par la simulation informatique.

Le fonctionnement du système de test selon l'invention est alors le suivant. Le démarrage du test est effectué par le signal T qui est appliqué sur le conducteur 25. Ce signal est appliqué à plusieurs éléments de la configuration de la figure 2. D'abord aux portes électronique 40 de manière à déconnecter le registre d'instruction 15 du bus de données 13, au circuit 19 de manière à configurer le registre 15 en compteur et à la mémoire 38 de manière à lui imposer un code d'instruction initial. Selon l'invention, ce code initial correspond à une instruction de rechargement du contexte, ladite instruction ayant pour but d'initialiser tous les registres à des états déterminés. Le signal T est également appliqué à d'autres éléments de la figure 2 comme indiqué ci-dessus pour les mettre dans des états également déterminés.

Par ailleurs, il est appliqué aux portes électroniques 32 et 33 pour déconnecter la mémoire 11 du système de test et aux portes électroniques 39 pour connecter le compteur polynomial 20 au bus 13.

Lorsque cette première instruction a été exécutée, le conducteur 29 fournit un signal F qui, par l'intermédiaire du circuit bistable 28, autorise la transmission de l'instruction de sauvegarde du contexte (registre 31) et provoque ensuite le passage du compteur 15 à l'état de comptage suivant correspondant au code de l'instruction suivante à exécuter.

Comme indiqué ci-dessus, l'instruction de sauvegarde du contexte provoque l'enregistrement des états sauvegardés des registres dans le compteur polynomial. L'instruction qui est ensuite exécutée est celle contenue dans le compteur 15 après son changement d'état et elle s'effectue sur la base des états des registres à la fin de l'instruction précédente, celle de sauvegarde du contexte.

Il est à noter que, selon une caractéristique de l'invention, certaines des opérandes qui sont nécessaires à l'exécution de certaines instructions sont fournies par les bornes de sortie du compteur polynomial 20 via les portes électroniques 39, le compteur polynomial étant sollicité en lecture à la place des mémoires et périphériques.

A la fin de l'exécution de chaque instruction nouvelle, le compteur 15 s'incrémente d'une unité de sorte qu'après un certain nombre d'incrémentations successives il affiche le code de la dernière instruction à tester. C'est cette dernière instruction décodée par le décodeur 23, qui fournit alors sur le conducteur de sortie 36 un signal D. Ce signal D est appliqué au circuit bistable 24 par l'intermédiaire d'un circuit ET 37 commandé par le signal F du conducteur 29. Le signal D n'est alors pris en compte que lorsque cette dernière instruction a été exécutée.

Le signal fourni par le circuit bistable 24 sur le conducteur 34 indique la fin de la procédure de test et est utilisé, d'une part, pour avertir la machine de test de la fin de ladite procédure et, d'autre part, pour transmettre (circuit ET 35) à ladite machine le signal de sortie du décodeur 21 présent sur le conducteur 26.

Si le processeur a fonctionné correctement, le code affiché par le compteur polynomial correspondra à celui déterminé par la simulation informatique et son décodage par le circuit 21 donnera l'information de bon fonctionnement à la machine de test.

Si le processeur n'a pas fonctionné correctement, le décodage du contenu du compteur polynomial donnera l'information de mauvais fonctionnement à la machine de test.

L'invention a été décrite en faisant ressortir les moyens à ajouter au microprocesseur de type classique pour qu'il puisse effectuer lui-même la séquence de test. Cependant, certains de ces moyens, notamment les portes électroniques, existent et il suffit de leur fournir des signaux à l'aide de connexions électriques complémentaires.

## Revendications

1. Système de test d'un microprocesseur réalisé sur une puce de circuit intégré, ledit microprocesseur comprenant au moins un registre d'instruction (15) pour recevoir les codes opératoires des opérations élémentaires, un dispositif opérateur (17) pour exécuter les opérations élémentaires, un dispositif de contrôle (16) desdites opérations élémentaires qui traduit les codes opératoires en signaux de commande du dispositif opérateur (17), un compteur polynomial (20), un bus d'adresses (14) qui connecte le dispositif opérateur (17) aux entrées du compteur polynomial (20) et un bus de données (13) qui connecte entre eux le registre d'instruction (15), le dispositif opérateur (17) et le compteur polynomial (20),
caractérisé en ce que ledit système de test comprend :
- des premiers moyens (19,40) pour transformer ledit registre d'instruction (15) en un compteur et pour déconnecter ce dernier du bus de données (13),
- des deuxièmes moyens (38) pour enregistrer dans ledit compteur (15) au début de la séquence de test un code opératoire correspondant à une instruction de rechargement du contexte de manière à initialiser les états de divers éléments du microprocesseur à une valeur déterminée,
- des troisièmes moyens (22,28,31) pour, à la fin de l'exécution d'une instruction dont le code est contenu dans ledit compteur (15), élaborer une instruction de sauvegarde de contexte dans le compteur polynomial (20) et incrémenter d'une unité le contenu du compteur (15),
- des quatrièmes moyens (23,24,37) pour déterminer la fin de la séquence de test et,
- des cinquièmes moyens (21,35) pour décoder le code contenu dans le compteur polynomial (20) à la fin de la séquence de test.

2. Système de test d'un microprocesseur selon la revendication 1 dans le cas où le microprocesseur est associé à une mémoire (11) et est connecté à cette dernière par des bus d'adresses (14) et de données (13), caractérisé en ce qu'il comporte en outre des sixièmes moyens (32,33) pour déconnecter, pendant la séquence de test, les entrées/sorties de ladite mémoire des bus d'adresses et de données.

3. Système de test d'un microprocesseur selon la revendication 1 ou 2, caractérisé en ce que les bornes de sortie du compteur polynomial (20) sont connectées au bus de données (13) par l'intermédiaire de portes électroniques (39), lesdites portes électroniques étant commandées de manière que lesdites bornes de sortie du compteur plynomial soient connectées au bus de données (13) pendant la séquence de test et fournissent les opérandes nécessaires à l'exécution de certaines instructions.

4. Système de test selon la revendication 1, 2, ou 3, caractérisé en ce que les premiers moyens comprennent des premières portes électroniques (19) qui connectent entre eux les différents éléments du registre d'instructions, lesdites portes électroniques n'étant activées que pendant la séquence de test et des deuxièmes portes électroniques (40), disposées sur le bus de données (13), qui permettent de déconnecter ce dernier du registre d'instruction (15) pendant la séquence de test.

5. Système de test selon l'une quelconque des revendications précédentes 1 à 4, caractérisé en ce que les deuxièmes moyens (38) comprennent une mémoire contenant le code de l'instruction de rechargement du contexte, le contenu de ladite mémoire étant transféré dans le compteur (15) au début de la séquence de test.

6. Système de test selon l'une quelconque des revendications précédentes 1 à 5, caractérisé en ce que les troisièmes moyens comprennent un circuit bistable (28) qui change d'état à la fin de l'exécution de chaque instruction de manière que ledit circuit bistable (28) fournisse un signal de transfert de l'instruction de sauvegarde de contexte à la fin de l'exécution d'une instruction dont le code est contenu dans le compteur (15) et fournisse un signal d'incrémentation du compteur (15) à la fin de l'exécution de l'instruction de sauvegarde du contexte.

7. Système de test selon l'une quelconque des revendications précédentes 1 à 6, caractérisé en ce que les quatrièmes moyens comprennent un décodeur (23) pour détecter la dernière instruction de la séquence de test qui est affichée par le compteur (15) et un circuit bistable (24) pour garder en mémoire la présence de la dernière instruction à tester de la séquence.

8. Système de test selon l'une quelconque des revendications précédentes 1 à 7, caractérisé en ce que les cinquièmes moyens comprennent un décodeur (21) pour détecter le code contenu dans le compteur polynomial (20) et une porte électronique (35) pour transmettre le signal de décodage à la machine de test à la fin de la séquence de test.

## Patentansprüche

1. Prüfsystem für einen Mikroprozessor, ausgeführt auf einem integrierten Schaltungschip, wobei der Mikroprozessor wenigstens ein Befehlsregister (15) zum Empfangen der Operationscodes der Elementaroperationen, eine Operationseinrichtung (17) zum Ausführen der Elementaroperationen, eine Kontrolleinrichtung (16) für die Elementaroperationen, die die Operationscodes in Steuersignale für die Operationseinrichtung (17) übersetzt, einen Polynomzähler (20), einen Adressenbus (14), der die Operationseinrichtung (17) mit den Eingängen des Polynomzählers (20) verbindet, und einen Datenbus (13), der das Befehlsregister (15), die Operationseinrichtung (17) und den Polynomzähler (20) miteinander verbindet, dadurch **gekennzeichnet,** daß das Prüfsystem umfaßt
- erste Mittel (19, 40), um das Befehlsregister (15) zu einem Zähler umzuwandeln und um letzteren vom Datenbus (13) zu trennen,
- zweite Mittel (38), um am Anfang der Prüfsequenz im Zähler einen Operationscode entsprechend einem Befehl zum Wiederladen des Kontexts zu registrieren derart, daß die Zustände verschiedener Elemente des Mikroprozessors auf einen bestimmten Wert initialisiert werden,
- dritte Mittel (22, 28, 31), um am Ende der Ausführung eines Befehls, dessen Code im Zähler (15) enthalten ist, einen Befehl zur Sicherstellung des Kontexts im Polynomzähler (20) zu erstellen und den Inhalt des Zählers (15) um eine Einheit zu erhöhen,
- vierte Mittel (23, 24, 37), um das Ende der Prüfsequenz zu bestimmen, und
- fünfte Mittel (21, 35), um den im Polynomzähler (20) enthaltenen Code am Ende der Prüfsequenz zu decodieren.

2. Prüfsystem für einen Mikroprozessor nach Anspruch 1, in dem Fall, in dem der Mikroprozessor einem Speicher (11) zugeordnet ist und mit dem letzteren durch Adressen (14)- und Daten (13)-Busse verbunden ist, dadurch **gekennzeichnet,** daß er außerdem sechste Mittel (32, 33) umfaßt, um die Eingänge/Ausgänge des Speichers der Adressen- und Datenbusse während der Prüfsequenz zu trennen.

3. Prüfsystem für einen Mikroprozessor nach Anspruch 1 oder 2, dadurch **gekennzeichnet**, daß die Ausgangsanschlüsse des Polynomzählers (20) mittels elektronischer Tore (39) mit dem Datenbus (13) verbunden sind, wobei die elektronischen Tore derart gesteuert sind, daß die Ausgangsanschlüsse des Polynomzählers während der Prüfsequenz mit dem Datenbus (13) verbunden sind und die zur Ausführung bestimmter Befehle erforderlichen Operanden liefern.

4. Prüfsystem nach Anspruch 1, 2 oder 3, dadurch **gekennzeichnet,** daß die ersten Mittel erste elektronische Tore (19) umfassen, die die verschiedenen Elemente des Befehlsregisters miteinander verbinden, wobei die elektronischen Tore lediglich während der Prüfsequenz aktiviert sind, und zweite elektronische Tore (40) umfassen, die auf dem Datenbus (13) vorgesehen sind, die es gestatten, während der Prüfsequenz den letzteren vom Befehlsregister (15) zu trennen.

5. Prüfsystem nach einem beliebigen der vorhergehenden Ansprüche 1 bis 4, dadurch **gekennzeichnet,** daß die zweiten Mittel (38) einen den Befehlscode zum Wiederladen des Kontexts enthaltenden Speicher umfassen, wobei am Anfang der Prüfsequenz der Inhalt des Speichers in den Zähler (15) übertragen wird.

6. Prüfsystem nach einem beliebigen der vorhergehenden Ansprüche 1 bis 5, dadurch **gekennzeichnet**, daß die dritten Mittel einen bistabilen Kreis (28) umfassen, der am Ende der Ausführung jedes Befehls den Zustand derart ändert, daß der bistabile Kreis (28) ein Signal zur Übertragung des Kontextsicherungsbefehls am Ende der Ausführung eines Befehls liefert, dessen Code im Zähler (15) enthalten ist und am Ende der Ausführung des Sicherungsbefehls für den Kontext ein Signal zur Inkrementierung des Zählers (15) liefert.

7. Prüfsystem nach einem beliebigen der vorhergehenden Ansprüche 1 bis 6, dadurch **gekennzeichnet,** daß die vierten Mittel einen Decodierer (23), um den letzten Befehl der Prüfsequenz zu erfassen, die durch den Zähler (15) angezeigt wird, und einen bistabilen Kreis (24) umfassen, um das Vorhandensein des letzten Befehls zum Prüfen der Sequenz im Speicher zu erhalten.

8. Prüfsystem nach einem beliebigen der vorhergehenden Ansprüche 1 bis 7, dadurch **gekennzeichnet**, daß die fünften Mittel einen Dekodierer (21) zum Erfassen des im Polynomzähler (20) enthaltenen Codes und ein elektronisches Tor (35) zum Übertragen des Decodiersignals zur Prüfmaschine am Ende der Prüfsequenz umfassen.

## Claims

1. System for testing a microprocessor produced on an integrated-circuit chip, the said microprocessor comprising at least one program register (15) for receiving the operation codes for the constituent operations, an operating device (17) for executing the constituent operations, a control device (16) for the said constituent operations which converts the operation codes into signals for controlling the operating device (17), a polynomial counter (20), an address bus (14) which connects the operating device (17) to the inputs of the polynomial counter (20) and a data bus (13) which connects together the program register (15), the operating device (17) and the polynomial counter (20), characterised in that the said test system comprises:
- first means (19, 40) for converting the said program register (15) into a counter and for disconnecting the latter from the data bus (13),
- second means (38) for recording in the said counter (15), at the start of the test sequence, an operation code corresponding to an instruction for reloading the context so as to initialise the states of various components of the microprocessor at a given value,
- third means (22, 28, 31) for, at the end of execution of an instruction whose code is contained in the said counter (15), producing an instruction for backing-up context in the polynomial counter (20) and incrementing the content of the counter (15) by one unit,
- fourth means (23, 24, 37) for determining the end of the test sequence, and
- fifth means (21, 35) for decoding the code contained in the polynomial counter (20) at the end of the test sequence.

2. System for testing a microprocessor according to Claim 1 where the microprocessor is associated with a memory (11) and is connected to the latter by address (14) and data (13) buses, characterised in that it also includes sixth means (32, 33) for disconnecting, during the test sequence, the inputs/outputs of the said memory from the address and data buses.

3. System for testing a microprocessor according to Claim 1 or 2, characterised in that the output terminals of the polynomial counter (20) are connected to the data bus (13) by means of electronic gates (39), the said electronic gates being controlled so that the said output terminals of the polynomial counter are connected to the data bus (13) during the test sequence and provide the operands necessary for the execution of certain instructions.

4. Test system according to Claim 1, 2 or 3, characterised in that the first means comprise first electronic gates (19) which connect together the different components of the program register, the said electronic gates being activated only during the test sequence, and second electronic gates (40), disposed on the data bus (13), which make it possible to disconnect the latter from the program register (15) during the test sequence.

5. Test system according to any one of the preceding Claims 1 to 4, characterised in that the second means (38) comprise a memory containing the context reloading instruction code, the content of the said memory being transferred into the counter (15) at the start of the test sequence.

6. Test system according to any one of the preceding Claims 1 to 5, characterised in that the third means comprise a bistable circuit (28) which changes state at the end of the execution of each instruction so that the said bistable circuit (28) supplies a context back-up instruction transfer signal at the end of the execution of an instruction whose code is contained in the counter (15) and supplies a signal for incrementing the counter (15) at the end of the execution of the context back-up instruction.

7. Test system according to any one of the preceding Claims 1 to 6, characterised in that the fourth means comprise a decoder (23) for detecting the last instruction in the test sequence which is displayed by the counter (15) and a bistable circuit (24) for keeping in memory the presence of the last instruction to be tested in the sequence.

8. Test system according to any one of the preceding Claims 1 to 7, characterised in that the fifth means comprise a decoder (21) for detecting the code contained in the polynomial counter (20) and an electronic gate (35) for transmitting the decoding signal to the test machine at the end of the test sequence.
